# EUROPÄISCHE PATENTANMELDUNG

(11) **EP 1 249 157 A1**
(43) Veröffentlichungstag der Anmeldung: **16.10.2002**
(21) Anmeldenummer: 02008025.5
(22) Anmeldetag: 10.04.2002
(51) Int. Cl.: A01D 34/86

(54) **Mähvorrichtung zum Mähen eines Bereiches neben einem Tragmittel**

(30) Priorität: 10.04.2001 DE 10118024; 09.05.2001 DE 10122407
(71) Anmelder: MULAG-FAHRZEUGWERK Heinz Wössner GmbH & CO KG, 77728 Oppenau-Löcherberg (DE)
(72) Erfinder: Tacke, Hermann, 49419 Wagenfeld-Ströhen (DE)
(74) Vertreter: Alber, Norbert, Dipl.-Ing.

(57) **Zusammenfassung**

Mähvorrichtungen zum Mähnen eines Bereichs neben einem in eine Antriebsrichtung bewegbaren Tragmittel, mit einem Mähwerk (27), das an einem um eine vertikale Achse schwenkbar gelagerten Tragarm (26) angeordnet ist und das in einer Normalposition einen vorgegebenen Querabstand in bezug auf die Arbeitsrichtung von dem Tragmittel aufweist, werden üblicherweise an Fahrzeugen, wie Mehrzweckfahrzeugen oder Traktoren, befestigt. Mittels derartiger Mähvorrichtungen werden beispielsweise Radstreifen neben Fahrbahnen oder Wegen gemäht. Problematisch hierbei ist es, dass mittels dieser Mähvorrichtungen Hindernisse wie Leitpfosten, Verkehrsschilder, Leitplanken oder Bäume großflächig beim Mähen umgangen werden müssen, um Beschädigungen zu vermeiden. Aus diesem Grunde ist bei den bekannten Mähvorrichtungen eine aufwendige Nachbearbeitung von Hand zum Freimähen dieser Hindernisse erforderlich. Zur Lösung dieses Problems wird eine Mähvorrichtung (20) angegeben, bei der der Tragarm (26) in der Normalposition zumindest in einem Abschnitt mindestens eine Erstreckungskomponente in Arbeitsrichtung aufweist, bei der Erfassungsmittel (30) zum Erfassen eines Hindernisses (21) in Arbeitsrichtung vor dem Mähwerk (27) und Stellmittel (39) zum Einstellen des Querabstandes abhängig von dem Erfassungszustand der Erfassungmittel (30) vorgesehen sind. Mit einer derartigen Mähvorrichtung (20) lassen sich Hindernisse vollständig freimähen, ohne dass zusätzliche Nachbearbeitungen von Hand erforderlich sind.

## Beschreibung

Die Erfindung betrifft eine Mähvorrichtung zum Mähen eines Bereichs neben einem in eine Arbeitsrichtung bewegbaren Tragmittel, mit einem Mähwerk, das an einem um eine vertikale Achse schwenkbar gelagerten Tragarm angeordnet ist und das in einer Normalposition einen vorgegebenen Querabstand in bezug auf die Arbeitsrichtung von dem Tragmittel aufweist.

Derartige Mähvorrichtungen werden beispielsweise zum Mähen von Seitenstreifen neben Straßen und Wegen verwendet. Als Tragmittel dienen üblicherweise Fahrzeuge, wie Mehrzweckkraftfahrzeuge oder Traktoren, an denen derartige Mähvorrichtungen seitlich befestigt sind. Wenn das Fahrzeug dann in Arbeitsrichtung, das heißt in seine Fahrtrichtung, fährt, wird ein Bereich seitlich neben dem Fahrzeug gemäht. Als Mähwerkzeug kommen hierbei häufig Balkenmäher aber auch solche mit rotierenden Schneidemessern zum Einsatz. Problematisch bei diesen bekannten Mähvorrichtungen ist, dass der zu mähende Seitenstreifen üblicherweise nicht frei von Hindernissen ist. Neben Straßen befinden sich auf dem Randstreifen üblicherweise Begrenzungspfosten, Leitplanken und Verkehrsschilder. Außerdem befinden sich auf den Randstreifen neben Straßen und Wegen häufig auch Bäume. Mit den bekannten Mähvorrichtungen müssen derartige Hindernisse meist großräumig umgangen werden. Dazu werden diese Hindernisse im Allgemeinen mit dem Fahrzeug umfahren. Teilweise werden diese Mähvorrichtungen aber auch an das Fahrzeug herangeschwenkt. Aus diesem Grunde kann mit den bekannten Mähvorrichtungen das Gras und sonstiger Bewuchs in der Nähe von Hindernissen nicht gemäht werden. Es ist somit erforderlich, im Bereich dieser Hindernisse von Hand nachzumähen. Dies führt zu unerwünschtem Arbeits- und somit auch Kostenaufwand.

Das der Erfindung zugrundeliegende Problem ist es, eine Mähvorrichtung anzugeben, mit der sich Hindernisse auf einfache Weise freimähen lassen, so dass eine nachträgliches Nachmähen von Hand nicht erforderlich ist.

Das Problem wird bei einer Mähvorrichtung der eingangs genannten Art dadurch gelöst, dass der Tragarm in der Normalposition zumindest in einem Abschnitt mindestens eine Erstreckungskomponente in Arbeitsrichtung aufweist, dass Erfassungsmittel zum Erfassen eines Hindernisses in Arbeitsrichtung vor dem Mähwerk und dass Stellmittel zum Einstellen des Querabstandes abhängig von dem Erfassungszustand der Erfassungsmittel vorgesehen sind.

Die Hindernisse müssen somit nicht von dem als Tragmittel dienenden Fahrzeug umfahren werden. Vielmehr erkennen die Erfassungsmittel selbständig ein Hindernis in Arbeitsrichtung vor dem Mähwerk. Weil sich der Tragarm in der Normalposition schräg nach vorn erstreckt, kann durch einfaches Zurückschwenken des Tragarmes der Querabstand zunächst vergrößert und dann verringert werden. Mittels der Stellmittel läßt sich dabei der Querabstand derart einstellen, dass das Hindernis allseitig freigemäht wird. Somit werden nachträgliche Mäharbeiten von Hand entbehrlich.

Eine Weiterbildung der Erfindung ist dadurch gekennzeichnet, dass der Tragarm einen im wesentlichen horizontalen Abschnitt aufweist. Mittels dieses Tragarmes läßt sich der Querabstand auf einfache Weise auch im Bereich von Leitplanken variieren. In diesem Falle sollte der horizontale Abschnitt unmittelbar bei dem Mähwerk sein, damit mittels dieses horizontalen Abschnittes das Mähwerk unter der Leitplanke hindurch geschoben werden kann.

Eine andere Weiterbildung zeichnet sich dadurch aus, dass der Tragarm, vorzugsweise in Arbeitsrichtung, gekrümmt ist. Er kann jedoch auch gewinkelt sein oder sich gerade schräg nach vorne erstrecken. Wird das am vorderen Ende des Tragarmes befestigte Mähwert beim Erfassen eines Hindernisses dann nach hinten geschwenkt, so wird zunächst der Querabstand vergrößert. Bei der gekrümmten Ausführungsform kann das Hindernis hierbei besonders weit hintermäht werden, indem das Mähwerk an dem gekrümmten Tragarm zunächst hinter dem Hindernis vorbeigeführt wird.

Bei einer Weiterbildung der Erfindung weisen die Erfassungsmittel Tastmittel zum Abtasten des Mähbereichs auf. Es sind aber auch optische Erfassungsmittel denkbar. Weil die Tastmittel den Mähbereich direkt abtasten, läßt sich besonders dicht an ein Hindernis heranmähen. Die Abtastmittel können beispielsweise eine Tastscheibe aufweisen. Dies bietet sich vor allem beim Verwenden eines rotierenden Schneidmittels bei dem Mähwerk an. Als Abtastmittel kann aber auch ein Tastarm vorgesehen sein. Ein solcher Tastarm ermöglicht auf einfache Weise das vollständige Herummähen um ein Hindernis. Dabei bietet sich der Tragarm als Tastarm an.

Bei einer Weiterbildung der Erfindung stellen die Stellmittel das Mähwerk in einem Nichterfassungszustand in die Normalposition. Dieses Stellen läßt sich zum Beispiel auf einfache Weise durch Vorspannmittel zum Vorspannen des Mähwerks in die Normalposition erreichen. Wenn dann die Vorspannkraft einstellbar ist, kann die erfindungsgemäße Mähvorrichtung einfach an die jeweiligen Bedingungen angepaßt werden.

Bei einer Weiterbildung weisen die Stellmittel ein Getriebe auf. Mittels dieses Getriebes läßt die jeweils erforderliche Kraft für das Stellen erreichen. Bei der Ausführungsform mit den Vorspannmitteln bietet sich insbesondere als Getriebe ein Kurvengetriebe an. Mittels dieses Kurvengetriebes läßt sich die Vorspannkraft der Vorspannmittel in eine geeignete Abtastkraft umwandeln. Insbesondere bei Verwendung des schwenkbaren Tragarmes als Tastarm kann das Kurvengetriebe so ausgebildet sein, dass bei jedem Schwenkwinkel dieselbe Tastkraft in Arbeitsrichtung auf das jeweils zu ummähende Hindernis wirkt.

Bei einer anderen Weiterbildung der Erfindung ist eine Führung zum Einstellen eines vorbestimmten Abstandes des Mähwerkes vom Boden vorgesehen. Die Führung kann beispielsweise einen Führungsschlitten oder eine Führungsrolle aufweisen. Auf diese Weise wird immer ein konstanter Abstand des Mähwerkes zum Boden eingehalten. Dadurch läßt sich mit der Mähvorrichtung nach der Erfindung ein besonders gleichmäßiges Mähergebnis erzielen.

Eine andere Ausführungsform der Erfindung zeichnet sich dadurch aus, dass das Mähwerk rotierende Schneidmittel aufweist, vorzugsweise einen Mähfaden, Mähmesser oder eine Mähscheibe. Derartige rotierende Schneidmittel lassen sich einfach und mit geringem Raumbedarf anordnen. Dadurch ist eine einfache Konstruktion für das Einstellen des Querabstandes möglich.

Bei der Mähvorrichtung nach der Erfindung ist außerdem ein Antrieb für das Mähwerk vorgesehen. Vorzugsweise handelt es sich dabei um einen hydraulischen, elektrischen oder pneumatischen Antrieb. Da hierbei flexible Zuleitungen für den Antrieb verwendet werden können, ergibt sich ein besonders einfacher Aufbau zum Einstellen des Querabstandes. Es ist aber ebenfalls ein mechanischer Antrieb denkbar.

Die erfindungsgemäße Mähvorrichtung kann vorteilhaft an einem anderen Mähgerät, beispielsweise an einem bekannten Randstreifenmäher, zusätzlich angebracht sein. Die erfindungsgemäße Mähvorrichtung läuft dann beispielsweise im Schatten der herkömmlichen Mäheinrichtung mit. Sobald ein Hindernis angefahren wird, wird die herkömmliche Mäheinrichtung weggeschwenkt oder hochgeklappt, und die erfindungsgemäße Mäheinrichtung kommt zum Einsatz. Hierdurch läßt sich der Randstreifen in einen Arbeitsgang abmähen.

Im folgenden wird ein Ausführungsbeispiel der Erfindung anhand der Figuren näher erläutert. Es zeigen:
- Fig. 1: eine schematische Darstellung einer Mähvorrichtung mit den Erfindungsmerkmalen in einer Seitenansicht als ein Ausführungsbeispiel der Erfindung,
- Fig. 2: eine vergrößerte Darstellung eines Tragarmes und eines Mähwerks der Mähvorrichtung von Fig. 1 in einer Seitenansicht,
- Fig. 3: den Tragarm und das Mähwerk von Fig. 2 in einer Vorderansicht,
- Fig. 4: die Mähvorrichtung von Fig. 1 in einer Draufsicht,
- Fig. 5: die Mähvorrichtung von Fig. 1 bei einem ersten Erfassen eines Hindernisses,
- Fig. 6: die Mähvorrichtung von Fig. 5 in einem späteren Abtastzustand,
- Fig. 7: die Mähvorrichtung von Fig. 6 in einem Zustand, in dem das Hindernis von dem Abtastarm abgetastet wird,
- Fig. 8: die Mähvorrichtung von Fig. 7 in einem späteren Abtastzustand,
- Fig. 9: die Abtastvorrichtung von Fig. 7 und 8 in einem noch späteren Abtastzustand,
- Fig. 10: die Mähvorrichtung in einem weit ausgeschwenkten Zustand,
- Fig. 11: die Mähvorrichtung von Fig. 10 in einem noch weiter ausgeschwenkten Zustand, kurz vor dem Freikommen von dem Hindernis,
- Fig. 12: die Mähvorrichtung von Fig. 11 beim Freikommen von dem Hindernis,
- Fig. 13: die Mähvorrichtung von Fig. 12 beim Zurückschwenken in die Normalposition.

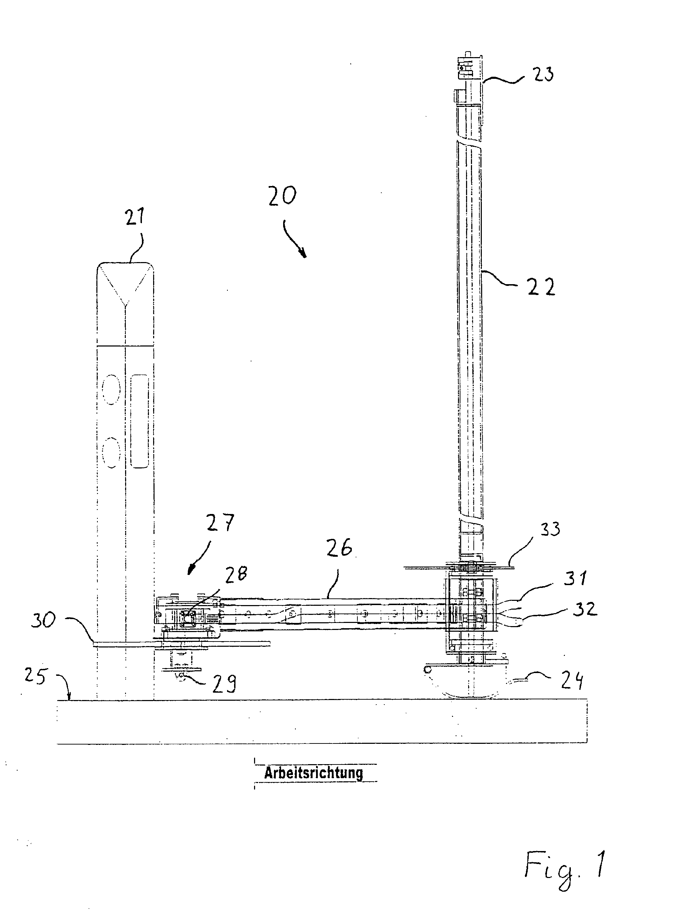

Fig. 1 zeigt eine schematische Seitenansicht einer Mähvorrichtung 20 mit den Erfindungsmerkmalen als ein Ausführungsbeispiel der Erfindung. Außerdem in der Figur abgebildet ist ein Hindernis 21, nämlich ein Leitpfosten 21. Der Leitpfosten 21 befindet sich in durch einen Pfeil angedeuteter Arbeitsrichtung vor der Mähvorrichtung 20.

Die Mähvorrichtung 20 weist einen langgestreckten Träger 22 auf, der sich in der Figur von oben nach unten erstreckt. An seinem oberen Ende hat der Träger 22 eine Befestigungsanordnung 23 zum Befestigen an einem nicht in der Figur dargestellten Tragmittel. Als Tragmittel kann ein Fahrzeug, wie ein Mehrzweckfahrzeug oder ein Traktor, dienen. Am unteren Ende des Trägers 22 ist eine Führung 24, nämlich ein Schlitten 24 angeordnet. Der Träger 22 liegt mit dem Schlitten 24 auf einem Untergrund 25 auf. Der Untergrund 25 ist in der Figur ein freizumähender Gasstreifen 25.

Oberhalb des Schlittens 24 ist an dem Träger 22 ein Arm 26 schwenkbar gelagert. Am von dem Träger 22 abgewandten Ende des Armes 26 ist ein Mähwerk 27 befestigt. Das Mähwerk 27 weist einen Antrieb 28, nämlich einen Hydraulikmotor 28, und Schneidmittel 29, nämlich einen Mähfaden 29, auf. Der Mähfaden 29 ist auf der dem Untergrund 25 zugewandten Seite des Armes 26 derart angeordnet, dass der Mähfaden 29 um eine in etwa vertikale Achse und in einer in etwa horizontalen Ebene von dem Hydraulikmotor 28 angetrieben rotierbar ist. Oberhalb des Mähfadens 29 sind Erfassungsmittel 30, nämlich eine Tastscheibe 30, angeordnet. Der Durchmesser der Tastscheibe 30 entspricht in etwa der Länge des Mähfadens 29. Der Hydraulikmotor 28 ist mittels zweier Hydraulikzuleitungen 31, 32 mit einer nicht in der Figur dargestellten Hydraulikpumpe verbunden. Die Hydraulikpumpe kann beispielsweise Bestandteil des als Tragmittel dienen Fahrzeugs sein.

Oberhalb des Armes 26 ist eine Kurvenscheibe 33 eines Kurvengetriebes gemeinsam mit dem Arm 26 schwenkbar um den Träger 22 angeordnet.

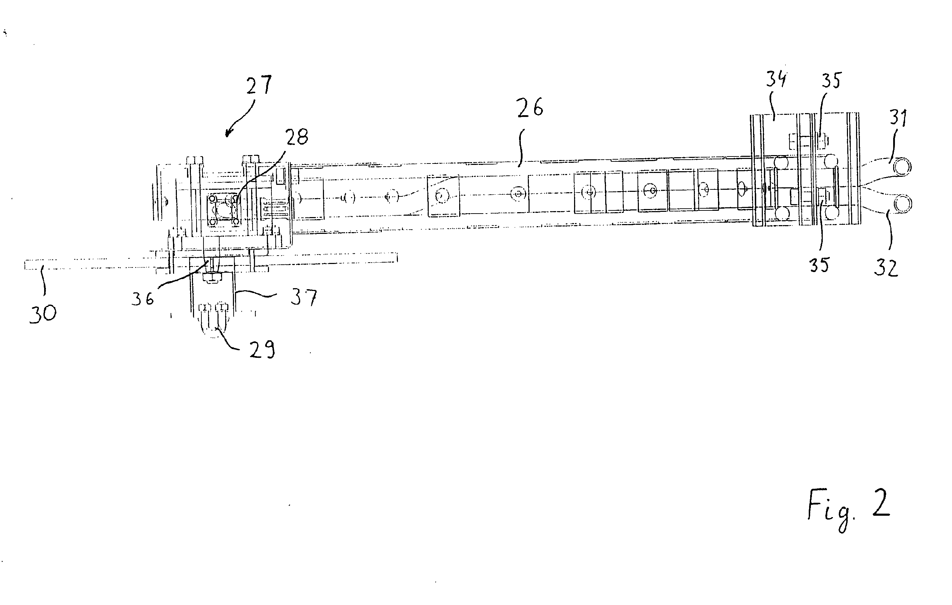

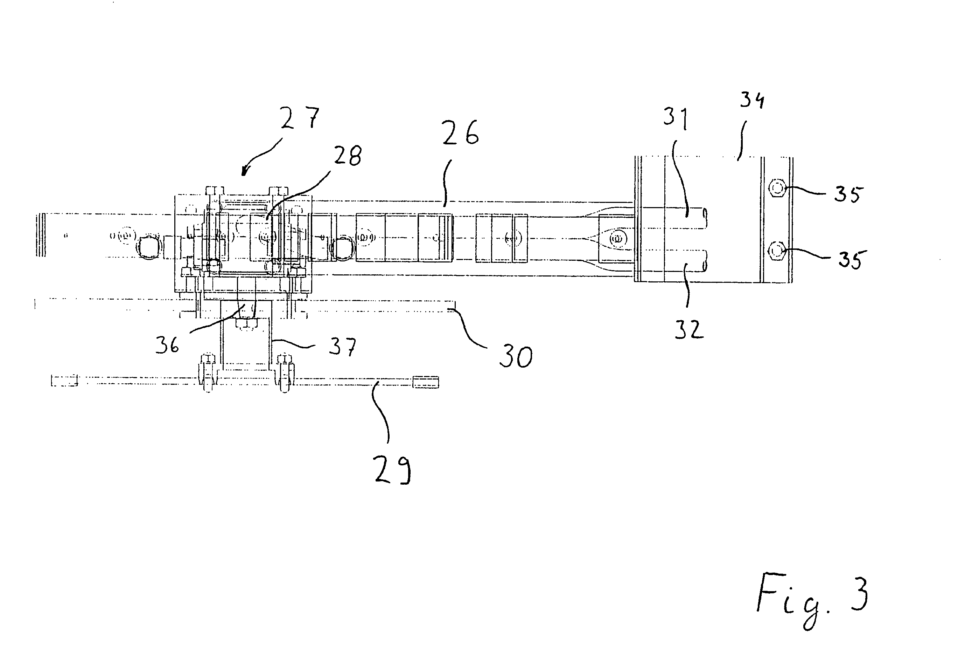

Fig. 2 zeigt eine vergrößerte Darstellung des Armes 26 und des Mähwerkes 27 von Fig. 1 in einer Seitenansicht. Fig. 3 zeigt den Arm 26 und das Mähwerk 27 in einer Vorderansicht. Am von dem Mähwerk 27 abgewandten Ende des Armes 26 ist eine Befestigungsanordnung 34 angeordnet. Die Befestigungsanordnung 34 ist ähnlich einer Schelle ausgeführt. Die Befestigungsanordnung 34 wird mittels Schrauben 35 an einer Aufnahme an dem Träger 22 befestigt. Außerdem in den Fig. 2 und 3 zu sehen ist eine Achse 36 des Hydraulikmotors 28, auf der ein Träger 37 für den Mähfaden 29 befestigt ist. Der Träger 37 und somit der Mähfaden 29 wird von dem Hydraulikmotor 28 über die Achse 36 angetrieben.

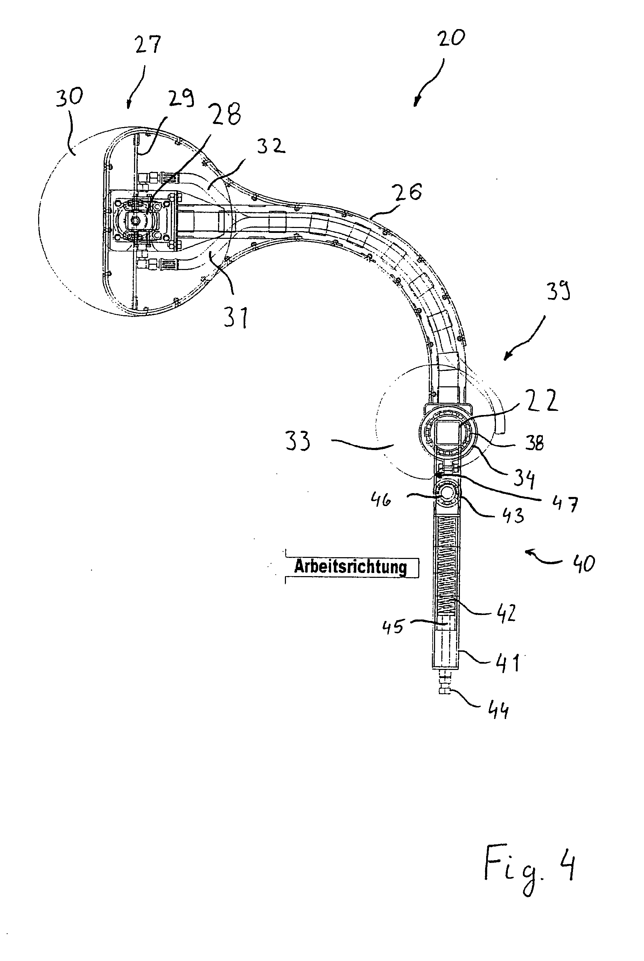

Fig. 4 zeigt schematisch die Mähvorrichtung 20 von Fig. 1 in einer Draufsicht. Wie sich der Figur entnehmen läßt, weist der Träger 22 einen quadratischen Querschnitt auf. Die Befestigungsanordnung 34 ist mittels eines Kugellagers 38 schwenkbar an dem Träger 22 befestigt. Auf diese Weise ist der Arm 26 mit dem Mähwerk 27 mittels des Kugellagers 38 und der Befestigungsanordnung 34 schwenkbar an dem Träger 22 befestigt.

Am von dem Mähwerk 27 abgewandten Ende des Armes 26 sind in der Figur Stellmittel 39 mit der Kurvenscheibe 33 abgebildet. Die Stellmittel 39 weisen außerdem Vorspannmittel 40 auf. Die Vorspannmittel 40 weisen ein Gehäuse 41 und eine darin angeordnete Feder 42, nämlich eine Schraubenfeder 42, auf. An dem dem Arm 26 zugewandten Ende der Schraubenfeder 42 ist ein in Längsrichtung der Feder verschiebbares Rad 43 angeordnet. An Ihrem von dem Rad 43 abgewandten Ende ist die Vorspannkraft der Schraubenfeder 42 mittels einer Schraube 44 und eines Stempels 45 einstellbar. Das Rad 43 ist mittels eines Kugellagers 46 um eine zu dem Träger 22 parallele Achse drehbar. In der Figur ist das Rad 43 von der Kurvenscheibe 33 abgerückt dargestellt. Diese Darstellung erfolgt der besseren Übersicht halber. Die Kurvenscheibe 33 weist einen Anschlag 47 auf.

Normalerweise wird das Rad 43 von der Vorspannkraft der Schraubenfeder 42 gegen die Kurvenscheibe 33 angedrückt. Der Umfang der Kurvenscheibe 33 ist als eine Art Spiralbahn ausgebildet. Auf diese Weise wird von der Schraubenfeder 42 mittels Anpressen des Rades 43 an den Außenumfang der Kurvenscheibe 33 eine Rückstellkraft erzeugt, die den Arm 26 in die in der Fig. 4 dargestellte Normalposition zurückstellt. Diese Rückstellkraft ist abhängig von der Krümmung der Kurvenscheibe 33. Im vorliegenden Fall ist die Krümmung der Kurvenscheibe 33 so gewählt, dass unabhängig von der Auslenkung des Armes 26 in der Figur 4 im Uhrzeigersinn auf den Außenrand der Tastscheibe 30 stets dieselbe Kraft einwirken muß, um den Arm 26 in der jeweiligen Position zu halten. Die Normalposition des Armes 26 wird durch den Anschlag 47 definiert. Wenn das Rad 43 an dem Anschlag 47 anliegt, tritt keine weitere Rückstellkraft durch die Schraubenfeder 42 auf den Arm 26 auf.

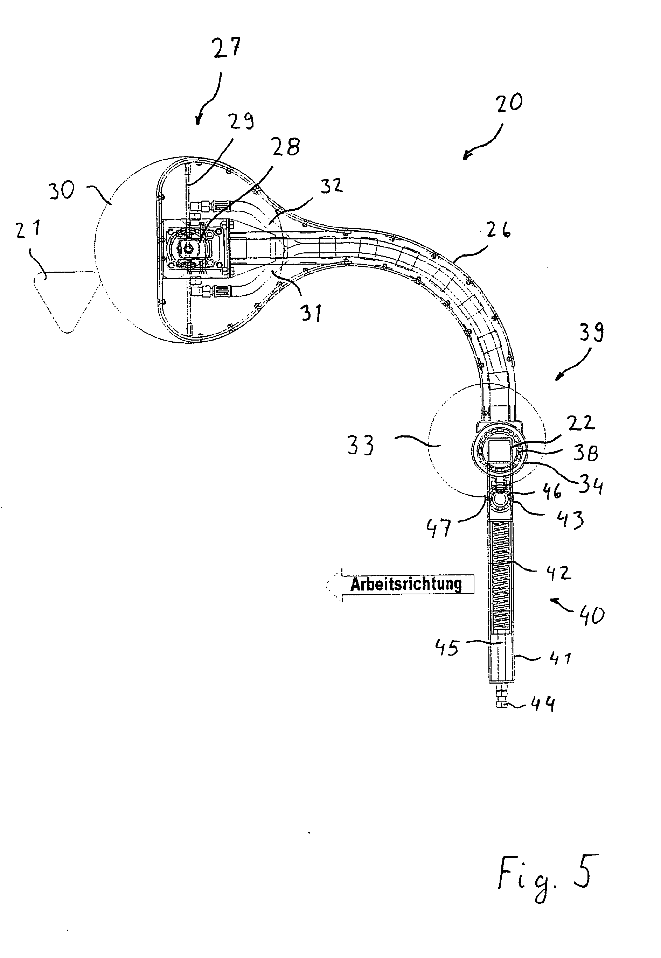

Im folgenden wird anhand der Fig. 5 bis 13 die Art und Weise beschrieben, wie mit der Mähvorrichtung 20 um ein Hindernis 21 herumgemäht werden kann. Fig. 5 zeigt die Mähvorrichtung 20 in ihrer Normalposition, bei der das Rad 43 an den Anschlag 47 anstößt. Die Mähvorrichtung 20 wird in durch einen Pfeil angedeutete Arbeitsrichtung auf ein Hindernis 21 zu bewegt und gelangt in Fig. 5 erstmalig mit der Tastscheibe 30 in Kontakt mit diesem Hindernis 21. Als Hindernis 21 ist wie in Fig. 1 der Leitpfosten 21 dargestellt. In diesem Zustand kann mit dem Mähfaden 29 bis nahezu an den Leitpfosten 21 herangemäht werden. Bei einem Bewegen der Mähvorrichtung in Arbeitsrichtung drückt der Leitpfosten dann auf die Tastscheibe 30 und bewirkt dadurch ein Schwenken des Armes 26 in der Fig. 5 nach rechts im Uhrzeigersinn gegen die von den Stellmitteln 29 erzeugte Rückstellkraft. Im einzelnen wird gemeinsam mit dem Arm 26 auch die Kurvenscheibe 33 im Uhrzeigersinn gedreht, wodurch das Rad 43, das auf dem Umfang der Kurvenscheibe 33 abrollt, in der Fig. 5 nach unten gegen die Vorspannkraft der Schraubenfeder 42 bewegt wird. Bei dieser Bewegung bewegt sich das Mähwerk 27 mit der Tastscheibe 30 zunächst nach **außen**, bis die Tastscheibe 30 in Arbeitsrichtung an dem Leitpfosten 21 vorbei gelangen kann.

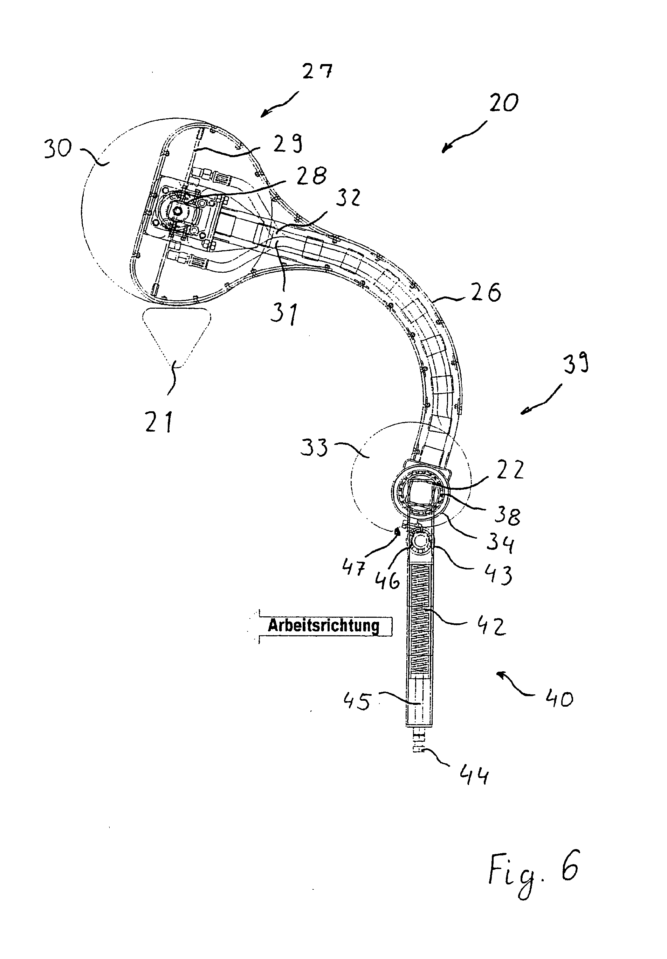

Fig. 6 zeigt die Mähvorrichtung 20 und den Leitpfosten 21 zu einem späteren Zeitpunkt, an dem das Mähwerk 27 und die Tastscheibe 30 so weit aufwärts bewegt sind, dass sie in Arbeitsrichtung an dem Leitpfosten 21 vorbeitreten können. In dem in der Fig. 6 gezeigten Zustand befinden sich das Mähwerk und die Tastscheibe 30 genau außerhalb des Leitpfostens 21. Auf diese Weise wird in der Fig. 6 der Bereich außerhalb des Leitpfostens 21 mit dem Mähfaden 29 gemäht. Wenn sich die Mähvorrichtung 20 weiter in Arbeitsrichtung fortbewegt, kommt die Tastscheibe 30 wieder von dem Leitpfosten 21 frei.

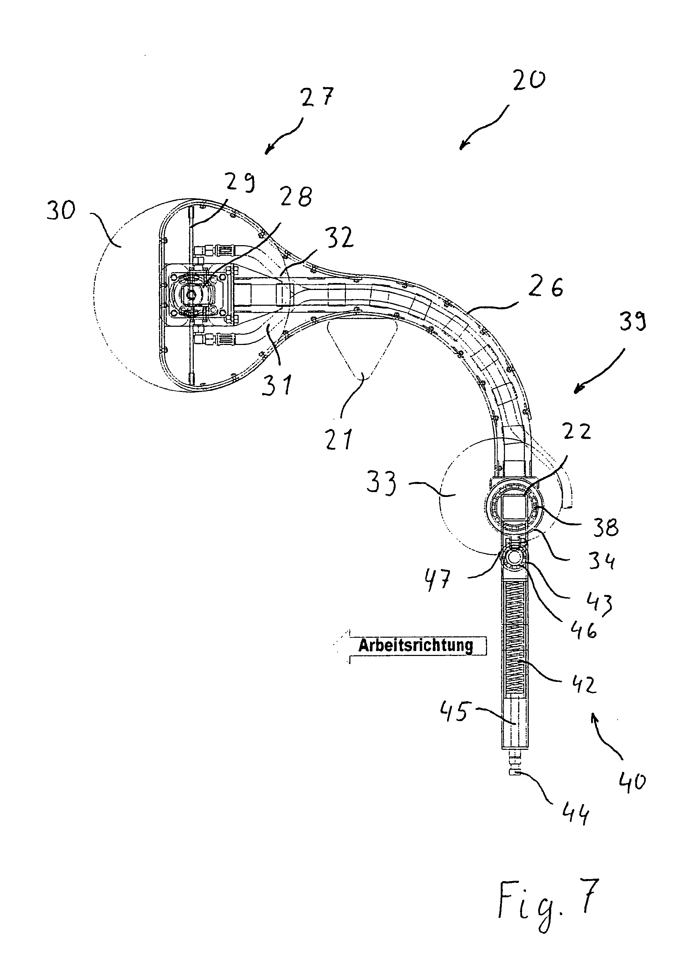

Fig. 7 zeigt einen späteren Zeitpunkt, an dem die Tastscheibe 30 von dem Leitpfosten 21 freigekommen ist. In dem in Fig. 7 dargestellten Zustand befindet sich die Mähvorrichtung 20 wieder in ihrer normalen Position. Der Arm 26 ist so weit zurückgeschwenkt, dass das Rad 43 wieder an dem Anschlag 47 der Kurvenscheibe 33 anliegt. In dem in Fig. 7 dargestellten Zustand wird ein Bereich in der Figur links von dem Leitpfosten 21 gemäht. Wenn sich die Mähvorrichtung 20 weiter in Arbeitsrichtung fortbewegt, wirkt der Arm 26 als Tastarm 26. Der Leitpfosten 21 drückt gegen den Tastarm 26, wodurch eine Kraft erzeugt wird, die den Arm 26 gegen die Rückstellkraft der Stellmittel 39 in der Figur nach rechts im Uhrzeigersinn schwenkt.

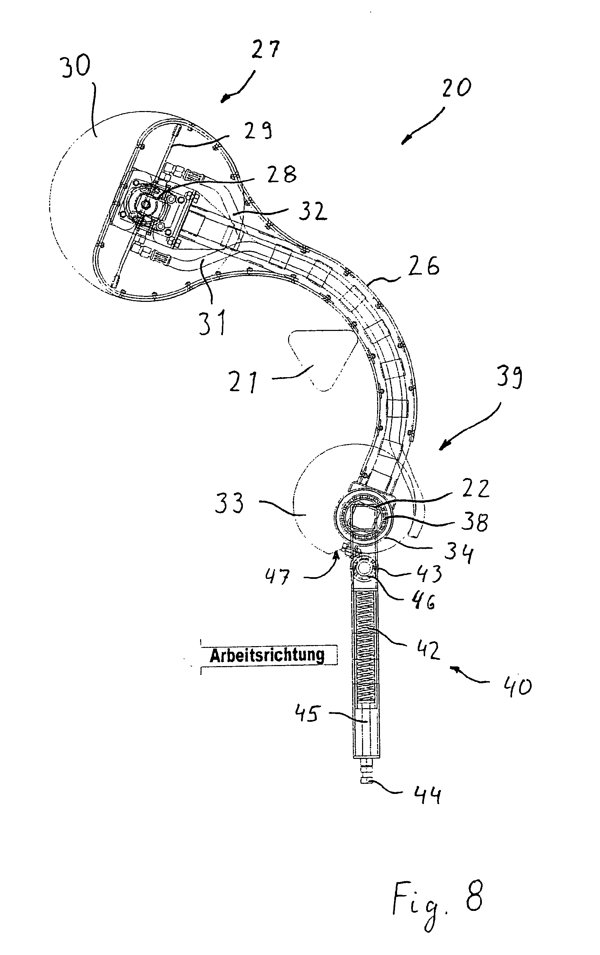

Fig. 8 zeigt einen späteren Zustand, in dem der Arm 26 von dem Leitpfosten 21 in der Figur nach rechts im Uhrzeigersinn aus seiner Normalposition herausgeschwenkt worden ist.

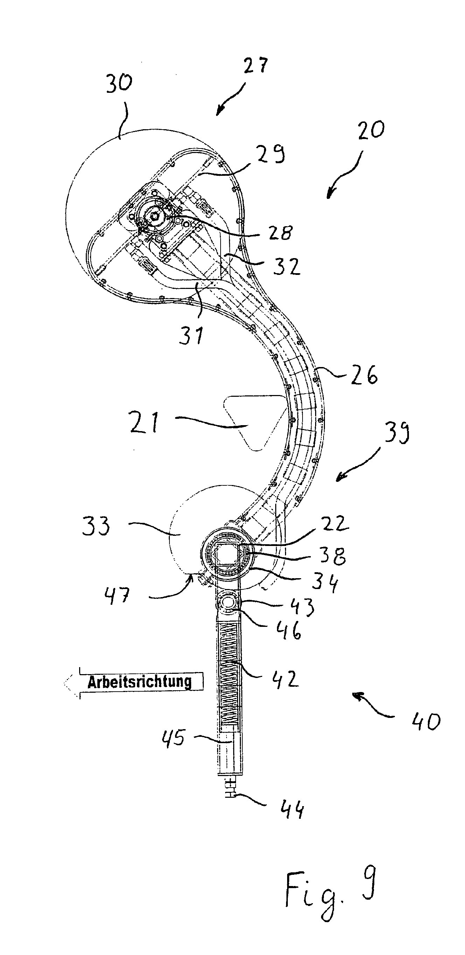

Fig. 9 zeigt einen noch späteren Zustand, in dem der Arm 26 noch weiter in der Figur nach rechts im Uhrzeigersinn geschwenkt worden ist. Das Mähwerk 27 und die Tastscheibe 30 befinden sich mittlerweile in der Figur genau außerhalb des Leitpfostens 21.

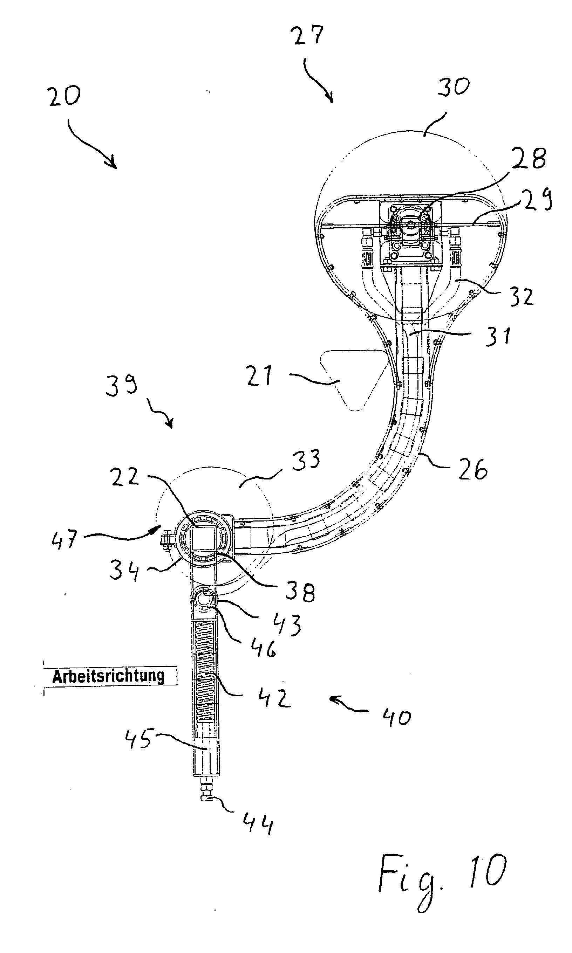

Fig. 10 zeigt einen noch späteren Zustand. Der Arm 26 ist mittlerweile um nahezu 90° gegen den in der Fig. 5 dargestellten Zustand in der Figur nach rechts im Uhrzeigersinn geschwenkt. Das Mähwerk 27 und die Tastscheibe 30 befinden sich in dem in der Figur dargestellten Zustand schräg rechts oberhalb von dem Leitpfosten 21.

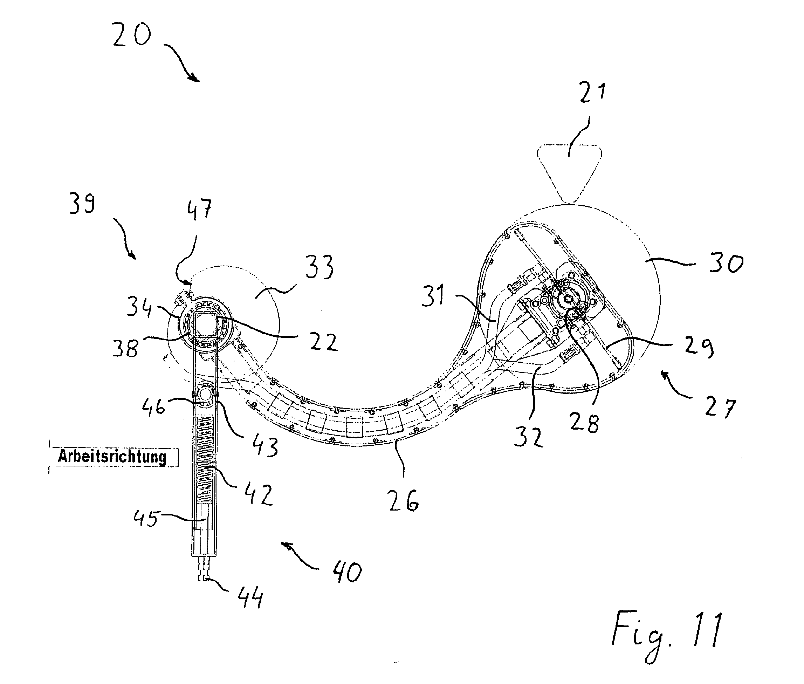

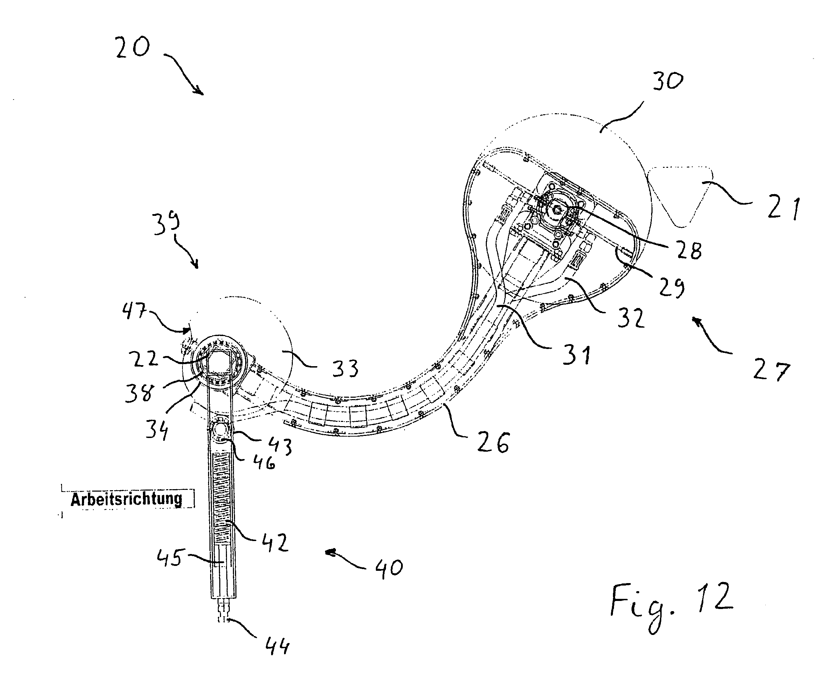

Fig. 11 zeigt einen Zustand der Mähvorrichtung 20, der sich ergibt, wenn die Mähvorrichtung 20 aus dem in Fig. 10 dargestellten Zugang weiter in Arbeitsrichtung bewegt wird. Der Arm 26 ist gegenüber Fig. 10 noch weiter in der Figur nach rechts im Uhrzeigersinn geschwenkt worden. Das Mähwerk 27 und die Tastscheibe 30 befinden sich nunmehr in der Figur unmittelbar unterhalb des Leitpfostens 21. Bei weiterem Bewegen der Mähvorrichtung 20 in Arbeitsrichtung ergibt sich ein in Fig. 12 gezeigter Zustand. In diesem Zustand ist der Arm 26 durch die von den Stellmitteln 39 erzeugte Rückstellkraft bereits wieder so weit in der Figur aufwärts gegen den Uhrzeigersinn geschwenkt worden, dass das Mähwerk 27 und die Tastscheibe 30 nahezu von dem Leitpfosten 21 freigekommen sind.

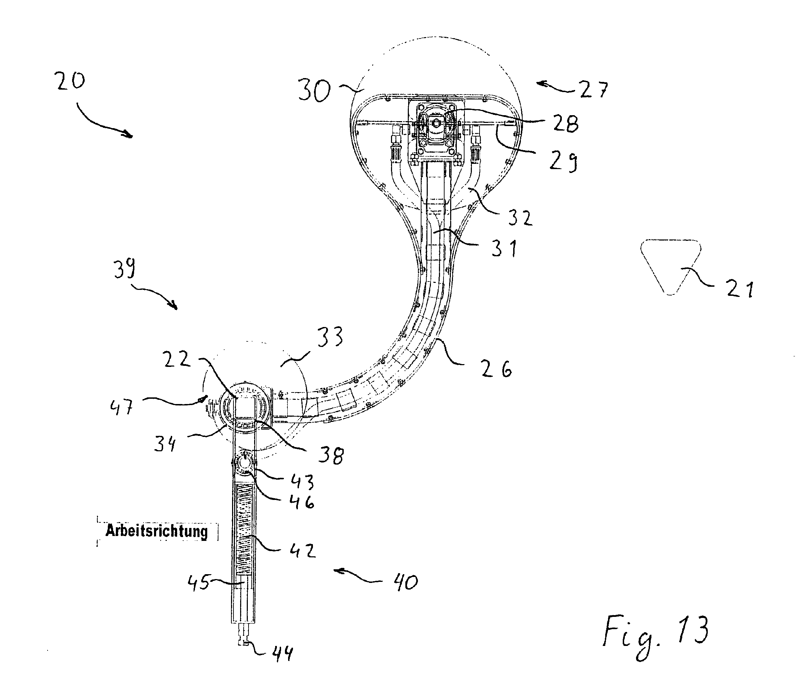

Einen späteren Zustand zeigt Fig. 13. Die Tastscheibe 30 und das Mähwerk 27 sind in dem hier abgebildeten Zustand von dem Leitposten 21 vollkommen freigekommen. Der Arm 26 wird durch die von den Stellmitteln 39 erzeugte Rückstellkraft weiter bis in seine Normalposition geschwenkt, in der das Rad 43 an dem Anschlag 47 anliegt.

### Bezugszeichenliste:

- 20: Mähvorrichtung
- 21: Leitpfosten
- 22: Träger
- 23: Befestigungsanordnung
- 24: Schlitten
- 25: Untergrund
- 26: Arm
- 27: Mähwerk
- 28: Antrieb
- 29: Schneidmittel
- 30: Tastscheibe
- 31: Hydraulikleitung
- 32: Hydraulikleitung
- 33: Kurvenscheibe
- 34: Befestigungsanordnung
- 35: Schrauben
- 36: Achse
- 37: Träger
- 38: Kugellager
- 39: Stellmittel
- 40: Vorspannmittel
- 41: Gehäuse
- 42: Feder
- 43: Rad
- 44: Schraube
- 45: Stempel
- 46: Kugellager
- 47: Anschlag

## Patentansprüche

1. Mähvorrichtung zum Mähen eines Bereichs neben einem in eine Arbeitsrichtung bewegbaren Tragmittel, mit einem Mähwerk (27), das an einem um eine vertikale Achse schwenkbar gelagerten Tragarm (26) angeordnet ist und das in einer Normalposition einen vorgegebenen Querabstand in Bezug auf die Arbeitsrichtung von dem Tragmittel aufweist, **dadurch gekennzeichnet, dass** der Tragarm (26) in der Normalposition zumindest in einem Abschnitt mindestens eine Erstreckungskomponente in Arbeitsrichtung aufweist, und dass Erfassungsmittel (30) zum Erfassen eines Hindernisses (21) in Arbeitsrichtung vor dem Mähwerk (27) vorhanden sind.

2. Mähvorrichtung nach Anspruch 1
**dadurch gekennzeichnet,dass**
der Abschnitt des Tragarmes (26) mit der Erstreckungskomponente in Arbeitsrichtung sich an das Mähwerk (27) anschließt.

3. Mähvorrichtung nach einem der vorhergehenden Ansprüche
**dadurch gekennzeichnet,dass**
der an das Mähwerk (27) sich anschließende Abschnitt des Tragarmes (26) in Arbeitsrichtung oder unter einem positiven, von der Arbeitsrichtung aus vom Tragmittel wegweisenden, Zwischenwinkel vom Mähwerk (27) abstrebt.

4. Mähvorrichtung nach einem der vorhergehenden Ansprüche
**dadurch ge kennzeichnet, dass**
das Erfassungsmittel (30) und die Stellmittel (39) ausschließlich mechanisch miteinander wirkverbunden sind.

5. Mähvorrichtung nach einem der vorhergehenden Ansprüche
**dadurch gekennzeichnet,dass**
der Tragarm (26) in der Aufsicht betrachtet, insbesondere in dem unmittelbar am Mähwerk (27) angrenzenden Bereich, deutlich schmaler, insbesondere wenigstens um den Faktor drei, insbesondere wenigstens um den Faktor fünf, schmaler ausgebildet ist als der Durchmesser des Mähwerkes (27).

6. Mähvorrichtung nach einem der vorhergehenden Ansprüche
**dadurch gekennzeichnet, dass** Stellmittel (39) zum Einstellen des Querabstandes zwischen dem Mähwerk (27) und der vertikalen Achse, insbesondere durch Einstellen der Schwenkposition des Tragarmes (26) um die vertikale Achse, abhängig von dem Erfassungszustand der Erfassungsmittel (30) vorgesehen sind.

7. Mähvorrichtung nach Anspruch 1, **dadurch gekennzeichnet, dass** der Tragarm (26) einen im wesentlichen horizontalen Abschnitt aufweist.

8. Mähvorrichtung nach Anspruch 1 oder 2, **dadurch gekennzeichnet, dass** der Tragarm (26), vozugsweise in Arbeitsrichtung, gekrümmt ist.

9. Mähvorrichtung nach einem der vorhergehenden Ansprüche, **dadurch gekennzeichnet, dass** die Erfassungsmittel Tastmittel (26, 30) zum Abtasten des Mähbereichs aufweisen.

10. Mähvorrichtung nach Anspruch 4, **dadurch gekennzeichnet, dass** die Abtastmittel eine Tastscheibe (30) aufweisen.

11. Mähvorrichtung nach Anspruch 4 oder 5, **dadurch gekennzeichnet, dass** die Abtastmittel einen Tastarm (26) aufweisen.

12. Mähvorrichtung nach Anspruch 6, **dadurch gekennzeichnet, dass** der Tragarm (26) der Tastarm (26) ist.

13. Mähvorrichtung nach einem der vorhergehenden Ansprüche, **dadurch gekennzeichnet, dass** die Stellmittel (39) das Mähwerk (27) in einem Nichterfassungzustand in die Normalposition stellen.

14. Mähvorrichtung nach Anspruch 13,
**dadurch gekennzeichnet,dass**
das Mähwerk (27) zusammen mit dem Tragarm (26) vom Vorspannmittel (40) vorgespannt wird in eine Schwenkrichtung des Tragarmes (26) gleichlaufend mit der Arbeitsrichtung.

15. Mähvorrichtung nach Anspruch 8, **gekennzeichnet durch** Vorspannmittel (40) zum Vorspannen des Mähwerks (27) in die Normalposition.

16. Mähvorrichtung nach Anspruch 9, **dadurch gekennzeichnet, dass** die Vorspannkraft einstellbar ist.

17. Mähvorrichtung nach einem der Ansprüche 8 bis 10, **dadurch gekennzeichnet, dass** die Stellmittel (39) ein Getriebe (33, 43) aufweisen.

18. Mähvorrichtung nach Anspruch 11, **dadurch gekennzeichnet, dass** das Getriebe ein Kurvengetriebe (33, 43) ist.

19. Mähvorrichtung nach einem der vorhergehenden Ansprüche, **gekennzeichnet durch** eine Führung (24) zum Einstellen eines vorbestimmten Abstandes des Mähwerkes (27) vom Boden (25).

20. Mähvorrichtung nach Anspruch 13, **dadurch gekennzeichnet, dass** die Führung einen Führungsschlitten (24) oder eine Führungsrolle aufweist.

21. Mähvorrichtung nach einem der vorhergehenden Ansprüche, **dadurch gekennzeichnet, dass** das Mähwerk (27) rotierende Schneidmittel (29) aufweist, vorzugsweise einen Mähfaden (29), Mähmesser oder eine Mähscheibe.

22. Mähvorrichtung nach einem der vorhergehenden Ansprüche, **gekennzeichnet durch** einen, vorzugsweise hydraulischen, elektrischen oder pneumatischen, Antrieb (28) für das Mähwerk (27).

23. Mähvorrichtung nach einem der vorhergehenden Ansprüche, **dadurch gekennzeichnet, dass** die Mähvorrichtung an einer vorhandenen Mäheinrichtung, beispielsweise einem bekannten Randstreifenmäher, zusätzlich angebracht ist.

24. Verfahren zum Freimähen eines Hindernisses, insbesondere eines Begrenzungspfostens, mittels einer in Arbeitsrichtung im wesentlichen gerade gegen das Hindernis herangeführten Mähvorrichtung mit einem Mähwerk (27), welches mit einem in der Aufsicht betrachtet konkav in Arbeitsrichtung nach vorne offenen gekrümmten Tragarm an einer vertikalen Achse schwenkbar gelagert ist und in der Normalposition, vor Kontaktieren des Hindernisses, schräg vor der vertikalen Achse steht, mit folgenden Schritten
- Kontaktieren des Erfassungsmittels (30) der Mähvorrichtung durch das Hindernis an einer Stelle, die vom vordersten Punkt der Kontur des Erfassungsmittels zur Innenseite hin versetzt ist,
- Weiterführen der Mähvorrichtung in Arbeitsrichtung gegen das Hindernis und dadurch Verschwenken des Tragarmes entgegen der Arbeitsrichtung, so dass das Mähwerk (27) am vorderen Ende des Tragarmes außen am Hindernis vorbeigeführt wird,
- Kontaktieren der nach vorne gerichteten Innenkontur des konkaven Tragarmes (26) durch das Hindernis und Entlanglaufen des Kontaktpunktes entlang des Tragarmes von dem Mähwerk (27) weg unter gleichzeitiger erneuter Verschwenkung des Tragarmes (26) entgegen der Arbeitsrichtung, bis das Mähwerk (27) um die Rückseite des Hindernisses herum gezogen ist und auf der Innenseite des Hindernisses vorbei sich nach vorne bewegen kann unter gleichzeitiger Verschwenkung des Tragarmes (26) in Arbeitsrichtung nach vorne und
- Nachaußen schwenken des Mähwerkes (27) entlang der Vorderseite des Hindernisses, bis Mähwerk (27) und Tragarm (26) wieder die Normalposition eingenommen haben.
